# EUROPÄISCHE PATENTSCHRIFT

(11) **EP 0 802 747 B1**
(45) Veröffentlichungstag und Bekanntmachung des Hinweises auf die Patenterteilung: **21.04.1999**
(21) Anmeldenummer: 96900257.5
(22) Anmeldetag: 09.01.1996
(51) Int. Cl.: A45C 11/34

(54) **ETUI MIT VERSTÄRKUNGSEINRICHTUNG**
CASE WITH REINFORCEMENT
ETUI A DISPOSITIF DE RENFORCEMENT

(30) Priorität: 13.01.1995 DE 29500451 U
(43) Veröffentlichungstag der Anmeldung: 29.10.1997
(73) Patentinhaber: Wöhrstein, Rolf, 50935 Köln (DE)
(72) Erfinder: Wöhrstein, Rolf, 50935 Köln (DE)
(74) Vertreter: Wanischeck-Bergmann, Axel, Dipl.-Ing.
(86) Internationale Anmeldenummer: DE9600016
(87) Internationale Veröffentlichungsnummer: WO9621375

(56) Entgegenhaltungen:
- EP-A- 0 598 160
- BE-A- 558 343
- CA-A- 856 627
- DE-A- 3 311 273
- DE-C- 654 244
- DE-U- 9 417 923
- US-A- 2 043 431

## Beschreibung

Die Erfindung betrifft ein Etui aus Zellulose für insbesondere zur Aufbewahrung von Brillen, Schreib- oder Zeichenutensilien und/oder anderen, im wesentlichen länglich ausgebildeten Gegenständen, bestehend aus zwei miteinander verbindbaren, im wesentlichen gleich großen Hälften, die einen Hohlraum umschließen, wobei die erste Hälfte einen zumindest in Teilbereichen ausgebildeten Absatz hat, der in den Teil des Hohlraumes der zweiten Hälfte derart einsteckbar ist, daß zwischen dem Absatz der ersten Hälfte und der Innenfläche der zweiten Hälfte eine reibschlüssige Verbindung entsteht.

Etuis der gattungsgemäßen Art haben sich zur Aufbewahrung von Brillen, Schreib- oder Zeichenutensilien und/oder anderen, im wesentlichen länglich ausgebildeten Gegenständen bewährt. Ein gattungsgemäßes Etui ist beispielsweise aus der DE-PS 654 244 bekannt.

Ausgehend von diesem Stand der Technik liegt der Erfindung die **Aufgabe** zugrunde, ein gattungsgemäßes Etui zu schaffen, das kostengünstig, in umweltverträglicher und stabiler Ausbildung herstellbar ist und insbesondere gegen Abrieb seiner Außen- und Grifflächen geschützt ist.

Die **Lösung** dieser Aufgabenstellung sieht bei einem derartigen Etui vor, daß die Hälften zumindest in Teilbereichen, insbesondere in den Endbereichen mit einem Überzug bespannt sind, daß der Absatz mit dem Überzug bespannt ist, daß der Überzug transparent ist und zwischen der Zellulose, insbesondere der Pappe der Hälften und des Absatzes und dem Überzug zumindest eine Schicht bedruckten Papiers angeordnet ist.

Es hat sich bei gattungsgemäßen Etuis gezeigt, daß ein häufiges Zusammenstecken und Auseinanderziehen der beiden Hälften im Bereich der Oberflächen der Hälften zu Abnutzungserscheinungen führt. Diese Abnutzungserscheinungen sind insbesondere auf den Kontakt dieser Flächen mit Feuchtigkeit und Fett absondernden Händen des Benutzers verbunden. Diese Abnutzungserscheinungen können in vorteilhafter Weise dadurch vermieden werden, daß bei einem gattungsgemäßen Etui die Hälften zumindest in Teilbereichen, insbesondere in den Endbereichen mit einem Überzug bespannt sind. Hierbei ist es nämlich vorteilhaft, daß der Bereich des Etuis geschützt wird, der mit den Händen des Benutzers in Kontakt kommt. Darüber hinaus verstärkt der Überzug die Gesamtkonstruktion des Etuis, so daß das Etui in seinen Endbereichen, aber auch im Bereich seiner Außenflächen eine erhöhte Stabilität gegen Beschädigungen aufweist.

Es hat sich gezeigt, daß durch die reibschlüssige Verbindung der beiden Hälften des Etuis mittels des Absatzes und der Innenfläche der ersten Hälfte auch in diesem Bereich Verschleißerscheinungen, nämlich Abrieb, auftritt, der zum einen dazu führt, daß das Etui im Bereich des Absatzes nach einer bestimmten Anzahl von Öffnungs- und Schließvorgängen unansehnlich aussieht bzw. nicht mehr die reibschlüssige Verbindung aufweist, die notwendig ist, um die beiden Hälften im geschlossenen Zustand sicher miteinander zu verbinden. Durch die Anordnung des Überzugs auf dem Absatz wird dieser in besonderem Maße vor den nachteiligen Erscheinungen geschützt.

Der Überzug besteht nach einem weiteren Merkmal der Erfindung aus einer Folie auf Kunststoffbasis, die vorzugsweise auf die Zellulose der Hälften und/oder des Absatzes kaschiert ist. Insbesondere ist die Folie unter Wärmeeinwirkung auf die Hälften und/oder den Absatz, vorzugsweise mittels eines Folien-Schweißverfahrens aufgebracht. Hierdurch läßt sich eine glattflächige Oberfläche auf den Hälften und dem Absatz erzielen, die einerseits schmutzabweisend oder zumindest leicht zu reinigen ist und andererseits eine ausreichende, verschleißverhindernde Härte aufweist.

Eine weitere Verbesserung der Stabilität des Etuis wird dadurch erzielt, daß die Hälften und/oder der Absatz zumindest im Bereich ihres Überzugs, vorzugsweise mit einem Anstrichmittel auf Wasserbasis lackiert sind. Durch das Aufbringen einer Lackschicht könnten beispielsweise Unebenheiten der Folie ausgeglichen werden. Darüberhinaus wird durch das Aufbringen der Lackschicht die Außenfläche des Etuis gehärtet.

Nach einer Weiterbildung dieser Ausführungsform ist vorgesehen, daß das Anstrichmittel als Klarlack ausgebildet ist, so daß die unter dem Überzug angeordneten bildhaften Ausgestaltungen auch nach dem Aufbringen des Lackes noch sichtbar sind.

Schließlich ist es bei einem erfindungsgemäßen Etui vorgesehen, daS der Überzug die Kanten der Hälften und/oder des Ansatzes ummantelt. Hierdurch wird der Vorteil erzielt, daS mit dem Überzug ein wirksamer Kantenschutz im Bereich der Hälften bzw. des Ansatzes gegeben ist, so daß auch im Bereich der Kanten Beschädigungen im wesentlichen vermieden werden.

Weitere Merkmale und Vorteile der Erfindung ergeben sich aus der nachfolgenden Beschreibung der zugehörigen Zeichnung, in der eine bevorzugte Ausführungsform des erfindungsgemäßen Etuis dargestellt ist. In der Zeichnung zeigen:
- Fig. 1: eine teilweise geschnitten dargestellte Seitenansicht einer ersten Ausführungsform eines Etuis in geöffneter Stellung;
- Fig. 2: eine teilweise geschnitten dargestellte Seitenansicht einer zweiten Ausführungsform eines Etuis in geöffneter Stellung;
- Fig. 3: einen im Querschnitt dargestellten Abschnitt des Absatzes des Etuis gem. den Figuren 1 oder 2 und
- Fig. 4: einen im Längsschnitt dargestellten Abschnitt im Bereich des Endes des Absatzes gem. Figur 3.

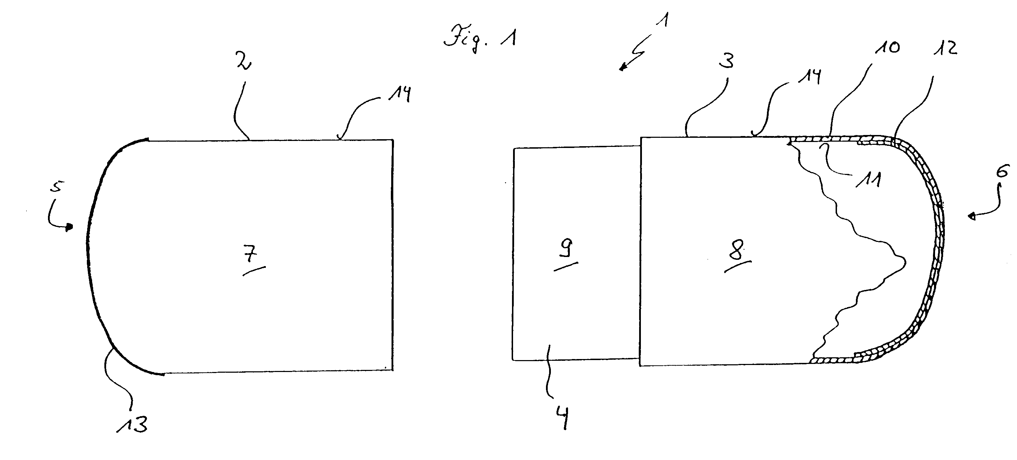

In Figur 1 ist ein Etui 1 aus Zellulose dargestellt, welches aus zwei Hälften 2 und 3 besteht, die einen nicht näher dargestellten Hohlraum in ihrem Inneren ummanteln. Die Hälfte 3 des Etuis 1 weist einen Absatz 4 auf, der derartig ausgebildet ist, daß er in den Hohlraum in der Hälfte 2 derart einsteckbar ist, daß zwischen dem Absatz 4 der Hälfte 3 und der Innenfläche der Hälfte 2 eine reibschlüssige Verbindung entsteht, wenn die Hälfte 3 mit der Hälfte 2 zusammengesteckt ist.

Der Absatz 4 ist fest mit der Hälfte 3 verbunden, vorzugsweise verklebt. Das Etui 1 sowie der Absatz 4 und demnach auch der Hohlraum des Etuis 1 weisen eine im Querschnitt im wesentlichen ovale Form auf.

Ferner ist das Etui 1 in den Endbereichen 5 und 6 der Hälften 2 und 3 kreisbogenabschnittförmig ausgebildet, so daß bei zusammengesteckten Hälften 2 und 3 ein im wesentlichen Kanten- und eckenloses Erscheinungsbild des Etuis 1 entsteht. Zur Anordnung von Karikaturen, Bildern, Zeichnungen, Schriftsymbolen oder dergleichen weist das Etui 1 auf seinen Hälften 2 und 3 Präsentationsflächen 7 und 8 auf. Eine weitere Präsentationsfläche 9 kann im Bereich des Absatzes 4 angeordnet sein, die dann sichtbar wird, wenn die Hälften 2 und 3 auseinandergezogen werden, um das Etui 1 beispielsweise mit einer Brille, mit Schreib- und Zeichenutensilien oder mit anderen, im wesentlichen länglich ausgebildeten, Gegenständen befüllt wird oder wenn diese Gegenstände aus dem Etui entnommen werden sollen.

In der Figur 1 ist die Hälfte 3 in teilweise geschnitten dargestellter Seitenansicht gezeigt, so daß die Wandung 10 aus Zellulose zu erkennen ist. Auf der Innenfläche 11 der Wandung 10 ist im Endbereich 6 eine Verstärkungseinrichtung 12 angeordnet, die aus einer Metallschale besteht, welche kraftschlüssig in den Endbereich 6 der Hälfte 3 eingesetzt ist. Durch diese Verstärkungseinrichtung 12 wird das Etui 1 im Bereich des Endbereiches 6 der Hälfte 3 derart verstärkt, daß eine Beschädigung des Endbereiches 6 der Hälfte 3 des Etuis 1 durch länglich ausgebildete Gegenstände, deren Länge größer ist als der Hohlraum in dem Etui 1 vermieden wird, wenn die Hälften 2 und 3 des Etuis 1 zusammengesteckt und in ihrer Längsrichtung mit einer Kraft beaufschlagt werden.

Alternativ zu der in Figur 1 in der Hälfte 3 dargestellten Verstärkungseinrichtung 12, die hier aus einer Metallschale besteht, kann hier auch eine Kunststoffschale eingesetzt werden. Darüberhinaus ist es möglich, daß die Verstärkungseinrichtung 12 über der gesamten Innenfläche 11 der Hälfte 3 des Etuis 1 angeordnet ist, so daß nicht nur der Endbereich 6 der Hälfte 3, sondern auch die im wesentlichen parallel zur Längsrichtung der Hälfte verlaufende Wandung 10 des Etuis 1 verstärkt ausgebildet ist.

Im Bereich der Hälfte 2 ist der Endbereich 5 durch einen diesen Bereich festigenden Anstrich, insbesondere im Form eines Klarlackes, auf Wasserbasis verstärkt ausgebildet. Der Anstrich ist durch die Bezugsziffer 13 gekennzeichnet und durch eine dickere Linie dargestellt. Es ist jedoch auch möglich, den Endbereich 5 oder 6 einer Hälfte 2 oder 3 des Etuis durch eine Folie 30 zu verstärken, die auf die Außenfläche 14 des Etuis 1 aufgeklebt ist.

Eine weitere Alternative des erfindungsgemäßen Etuis 1 ist darin zu sehen, daß die Stabilisierung der Endbereiche 5 und 6 der Hälften 2 und 3 des Etuis 1 sowohl durch Verstärkungseinrichtungen 12 als auch durch Anstriche 13 oder Folien 30 erfolgt, wobei die Verstärkungseinrichtung 12 beispielsweise auch aus einem textilen Material, nämlich einem Samt, bestehen kann. Eine derart ausgebildete Verstärkungseinrichtung 12 ist vorzugsweise mit der Innenfläche 11 des Etuis 1 verklebt.

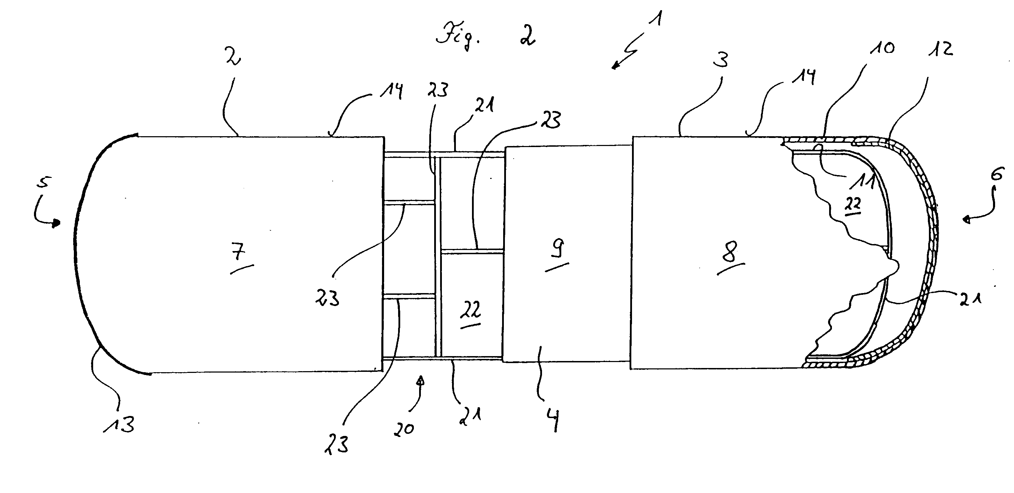

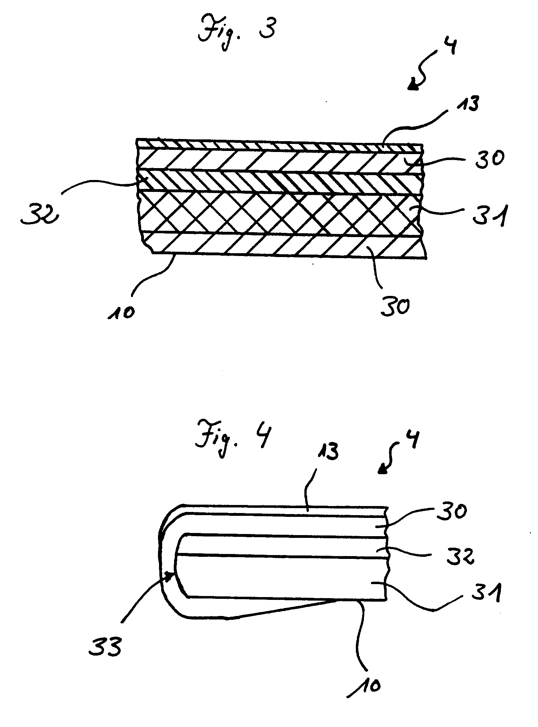

In der Figur 3 ist der Aufbau der Wandung 10 des Etuis anhand des Absatzes 4 vergrößert dargestellt. Kern der Wandung 10 ist eine Zelluloseschicht 31 aus Pappe. Auf diese Zelluloseschicht ist eine Papierschicht 32 aufgeklebt, die auf ihrer der Zelluloseschicht 31 abgewandten Oberfläche mit einem Bild, Ornamenten oder dergleichen bedruckt ist, so daß durch die Papierschicht 32 die sichtbare Außenfläche gebildet ist. Auf dieser Papierschicht 32 ist nun die Folie 30 angeordnet, welche auf Kunststoff basiert und unter Wärmeeinwirkung auf die Hälften 2 und 3 sowie den Absatz 4, vorzugsweise mittels eines Folien-Schweißverfahrens aufgebraucht ist. Die Folie 30 ist durchsichtig, so daß die darunter liegende Papierschicht 32 visuell durch die Folie 30 wahrgenommen werden kann.

In gleicher Weise ist auf der der Papierschicht 32 abgewandten Fläche der Zelluloseschicht 31 eine weitere Folie 30 aufgebracht, die, wie insbesondere aus Figur 4 zu erkennen ist, einstückig mit der oberhalb der Papierschicht 32 angeordneten Folie 30 verbunden, so daß die Folie 30 den Kantenbereich 33 des Absatzes 4, aber auch einer der Hälften 2 oder 3 ummantelt und gegen Beschädigungen schützt.

Schließlich ist die Folie 30 mit dem Anstrich 13 überzogen, der aus einem Klarlack auf Wasserbasis besteht. Der Anstrich 13 bedeckt im dargestellten Ausführungsbeispiel lediglich die Oberfläche des Absatzes 4. Es ist aber auch denkbar, daß der Anstrich 13 auf allen Flächen, d. h. sowohl auf den Außenflächen als auch auf den Innenflächen des Etuis aufgetragen ist, wie dies beispielsweise mittels eines Tauchbades möglich ist.

Eine weitere Ausführungsform des erfindungsgemäßen Etuis ist in der Figur 2 dargestellt. Diese Ausführungsform des Etuis 1 unterscheidet sich von der Ausführungsform des Etuis 1 gemäß Figur 1 dadurch, daß in dem Hohlraum der beiden Hälften 2, 3 des Etuis 1 ein Einsatz 20 in Form einer im wesentlichen der Kontur des Hohlraumes angepaßten Aufnahmevorrichtung angeordnet ist, die zumindest vier Seitenwände 21 und eine Bodenplatte 22 aufweist. Der Einsatz 20 ist in seiner Längs- und Querrichtung durch mehrere Stege 23 in einzelne Fächer unterteilt. Derart ausgebildet eignet sich das erfindungsgemäße Etui (1) insbesondere zur Aufbewahrung von Kleinteilen, wie beispielsweise Pillen oder Tabletten, Schrauben oder Nägeln oder auch Nahrungsmitteln wie Bonbons oder dergleichen Süßwaren.

## Patentansprüche

1. Etui aus Zellulose insbesondere zur Aufbewahrung von Brillen, Schreib- oder Zeichenutensilien und/oder anderen, im wesentlichen länglich ausgebildeten Gegenständen, bestehend aus zwei miteinander verbindbaren, im wesentlichen gleich großen Hälften (2, 3), die einen Hohlraum umschließen, wobei die erste Hälfte (3) einen zumindest in Teilbereichen ausgebildeten Absatz (4) hat, der in den Teil des Hohlraumes der zweiten Hälfte (2) derart einsteckbar ist, daß zwischen dem Absatz (4) der ersten Hälfte (3) und der Innenfläche (11) der zweiten Hälfte (2) eine reibschlüssige Verbindung entsteht, **dadurch gekennzeichnet,** daß die Hälften (2, 3) zumindest in Teilbereichen, insbesondere in den Endbereichen mit einem Überzug bespannt sind, daß der Absatz (4) mit dem Überzug bespannt ist, daß der Überzug transparent ist und zwischen der Zellulose, insbesondere der Pappe (31) der Hälften (2, 3) und des Absatzes (4) und dem Überzug zumindest eine Schicht bedruckten Papiers (32) angeordnet ist.

2. Etui nach Anspruch 1, dadurch gekennzeichnet, daß der Überzug aus einer Folie (30) auf Kunststoffbasis besteht, die vorzugsweise auf die Zellulose der Hälften (2, 3) und/oder des Absatzes (4) kaschiert ist.

3. Etui nach Anspruch 2, dadurch gekennzeichnet, daß die Folie (30) unter Wärmeeinwirkung auf die Hälften (2, 3) und/oder den Absatz (4), vorzugsweise mittels eines Folien-Schweißverfahrens, aufgebracht ist.

4. Etui nach Anspruch 1, dadurch gekennzeichnet, daß die Hälften (2, 3) und/oder der Absatz (4) zumindest im Bereich ihres Überzugs, vorzugsweise mit einem Anstrichmittel auf Wasserbasis lackiert sind.

5. Etui nach den Ansprüchen 1 und 4, dadurch gekennzeichnet, daß das Anstrichmittel als Klarlack ausgebildet ist.

6. Etui nach Anspruch 1, dadurch gekennzeichnet, daß der Überzug die Kanten (33) der Hälften (2, 3) und/oder des Ansatzes (4) ummantelt.

## Claims

1. A case made of cellulose, particularly for keeping eye glasses, writing or drawing utensils and/or other substantially elongated items, said case being comprised of two halves (2, 3) that can be connected to each other and are substantially of the same size and enclose a hollow space, the first half (3) having formed, at least in part regions, a step (4) which can be plug-fitted within the part of the hollow space of the second half (2) in such a manner that between the step (4) of the first half (3) and the inner surface (11) of the second half (2) a frictional engagement is produced, **characterized in** that said halves (2, 3) are covered, at least in part regions and particularly in the end regions, with a cover, that the step (4) is covered with said cover, that the cover is transparent, and that between the cellulose, particularly the paper-board (31) of said halves (2, 3) and of said step (4), and the cover at least one layer of print paper (32) is arranged.

2. Case according to claim 1, characterized in that the cover is comprised of a foil (30) based on synthetic material, which foil is preferably laminated onto the cellulose of said halves (2, 3) and/or of said step (4).

3. Case according to claim 2, characterized in that said foil (30) is applied to said halves (2, 3) and/or said step (4) preferably by means of a foil welding method.

4. Case according to claim 1, characterized in that said halves (2, 3) and/or said step (4) are varnished, at least in the region of their cover, with a water-based paint.

5. Case according to the claims 1 and 4, characterized in that the paint is in the form of a clear lacquer.

6. Case according to claim 1, characterized in that the cover wraps the edges (33) of the halves (2, 3) and/or of the step (4).

## Revendications

1. Etui en cellulose, en particulier pour conserver des lunettes, des ustensiles pour écrire ou dessiner et/ou d'autres objets, configurés de forme substantiellement allongée, constitué par deux moitiés substantiellement de même grandeur (2, 3), pouvant être reliées l'une à l'autre, qui enferment un espace creux, la première moitié (3) ayant un retrait (4) configuré au moins en zones partielles qui peut être emboîté dans la partie de l'espace creux de la seconde moitié (2) de telle manière qu'il se forme, entre le retrait (4) de la première moitié (3) et la surface intérieure (11) de la seconde moitié (2), un assemblage par friction, caractérisé en ce que les moitiés (2, 3) sont recouvertes d'un revêtement au moins dans des zones partielles, en particulier dans les zones d'extrémité, que le retrait (4) est recouvert du revêtement, que le revêtement est transparent et au moins une couche de papier imprimé (32) est placée entre la cellulose, en particulier entre le carton (31) des moitiés (2, 3) et du retrait (4), et le revêtement.

2. Etui selon la revendication 1, caractérisé en ce que le revêtement est constitué par une feuille (30) à base de matière synthétique qui est contrecollée de préférence sur la cellulose des moitiés (2, 3) et/ou du retrait (4).

3. Etui selon la revendication 2, caractérisé en ce que la feuille (30) est appliquée, par action thermique, sur les moitiés (2, 3) et/ou le retrait (4), de préférence au moyen d'un procédé de soudage de la feuille.

4. Etui selon la revendication 1, caractérisé en ce que les moitiés (2, 3) et/ou le retrait (4) sont laqués au moins dans la zone de leur revêtement, de préférence avec un agent de peinture à base aqueuse.

5. Etui selon les revendications 1 et 4, caractérisé en ce que l'agent de peinture est configuré comme une laque transparente.

6. Etui selon la revendication 1, caractérisé en ce que le revêtement enveloppe les arêtes (33) des moitiés (2, 3) et/ou du retrait (4).
